# FASCICULE DE BREVET EUROPEEN

(11) **EP 1 775 166 B1**
(45) Date de publication et mention de la délivrance du brevet: **08.07.2009**
(21) Numéro de dépôt: 06291554.1
(22) Date de dépôt: 04.10.2006
(51) Int. Cl.: B60R 5/04

(54) **Dispositif de recouvrement d'un compartiment à bagage permettant le maintien en position relevée d'une bavette en position d'utilisation**
Vorrichtung zum Abdecken eines Gepäckabteils welche in einer hochgeklappten Stellung feststellbar ist.
Device for covering a luggage compartment which can be fixed in a raised position

(30) Priorité: 17.10.2005 FR 0553140
(43) Date de publication de la demande: 18.04.2007
(73) Titulaire: CENTRE D'ETUDE ET RECHERCHE POUR L'AUTOMOBILE ( CERA), 51100 Reims (FR)
(72) Inventeur: Bayle, André-Xavier, 51100 Reims (FR)
(74) Mandataire: Sayettat, Julien Christian

(56) Documents cités:
- DE-C1- 19 637 072
- DE-C1- 19 745 152
- FR-A- 2 732 653
- FR-A- 2 850 917
- FR-A- 2 851 528
- US-A- 4 991 898
- US-B1- 6 402 217

## Description

L'invention concerne un dispositif de recouvrement d'un compartiment à bagages de véhicule automobile.

Il est connu, notamment dans les véhicules de type break ou monospace, de réaliser un dispositif de recouvrement d'un compartiment à bagages de véhicule automobile comprenant :
- deux supports latéraux solidaires du compartiment à bagages,
- un cache bagages comprenant un rideau de recouvrement souple, un dispositif d'enroulement dudit rideau, associé au bord avant dudit rideau et auxdits supports latéraux, et une bavette rigide, sensiblement plane, associé au bord arrière dudit rideau, ladite bavette comprenant deux coins avant agencés pour coopérer avec des moyens de réception prévus sur lesdits supports latéraux de sorte à permettre le maintien du rideau en position horizontale déroulée d'utilisation, ladite bavette masquant horizontalement, dans le prolongement dudit rideau, la partie arrière dudit compartiment à bagages,
lesdits coins et lesdits moyens de réception étant respectivement agencés pour permettre, par manipulation de l'utilisateur, un pivotement vers le haut de ladite bavette autour desdits coins de sorte à permettre un accès audit compartiment à bagages lorsque ledit rideau est en position déroulée d'utilisation. Le document DE 196 37 072 C décrit un tel dispositif.

La bavette a pour fonctions principales de rigidifier le bord arrière du rideau, de masquer la partie arrière du compartiment à bagages et de former moyen de préhension pour l'utilisateur qui souhaite manipuler le rideau de sorte à l'enrouler ou à le dérouler.

L'agencement décrit ci-dessus est particulièrement approprié lorsque la baie vitrée du hayon est ouvrable, notamment par rotation autour de son bord supérieur, de sorte à permettre l'accès aux objets déposés sur le rideau en position déroulée, et ceci sans avoir à ouvrir le hayon. Il permet en outre à l'utilisateur d'avoir accès à des objets disposés sous le rideau alors que le hayon n'est pas ouvert, ceci par simple pivotement de la bavette.

Cependant, dans un tel agencement, il n'est pas prévu que la bavette puisse rester de façon stable en position relevée. De ce fait, l'accès aux objets peut s'avérer malcommode, une main de l'utilisateur étant utilisée à maintenir ladite bavette en position relevée.

L'invention a pour but de remédier à cet inconvénient en proposant un dispositif dans lequel, lorsque le rideau est en position déroulée d'utilisation, la bavette est relevable de sorte à permettre l'accès aux bagages situés dans le compartiment à bagages, la position relevée étant stable ce qui facilite l'accès aux objets.

A cet effet, l'invention propose un dispositif de recouvrement d'un compartiment à bagages de véhicule automobile, ledit dispositif comprenant :
- deux supports latéraux solidaires du compartiment à bagages,
- un cache bagages comprenant un rideau de recouvrement souple, un dispositif d'enroulement dudit rideau, associé au bord avant dudit rideau et auxdits supports latéraux, et une bavette rigide, sensiblement plane, associée au bord arrière dudit rideau, ladite bavette comprenant deux coins avant agencés pour coopérer avec des moyens de réception prévus sur lesdits supports latéraux de sorte à permettre le maintien dudit rideau en position horizontale déroulée d'utilisation, ladite bavette masquant horizontalement, dans le prolongement dudit rideau, la partie arrière dudit compartiment à bagages,
lesdits coins et lesdits moyens de réception étant respectivement agencés pour permettre, par manipulation de l'utilisateur, un pivotement vers le haut de ladite bavette autour desdits coins de sorte à permettre un accès audit compartiment à bagages lorsque ledit rideau est en position déroulée d'utilisation, lesdits coins et lesdits moyens de réception desdits coins étant respectivement agencés pour permettre un positionnement stable de ladite bavette la position relevée.

Dans ce descriptif, les termes de positionnement dans l'espace (avant, arrière, latéral, horizontal, vertical, longitudinal,...) sont pris en référence au dispositif monté sur véhicule.

Par bavette « sensiblement plane », on entend une bavette s'étendant longitudinalement sur une longueur suffisante pour permettre l'accès au compartiment à bagages quand elle est en position relevée.

Par « mécanisme d'enroulement », on entend un mécanisme comprenant un moyen de rappel élastique tendant à ramener le rideau en position enroulée.

D'autres particularités et avantages de l'invention apparaîtront dans la description qui suit, faite en référence aux figures jointes dans lesquelles :

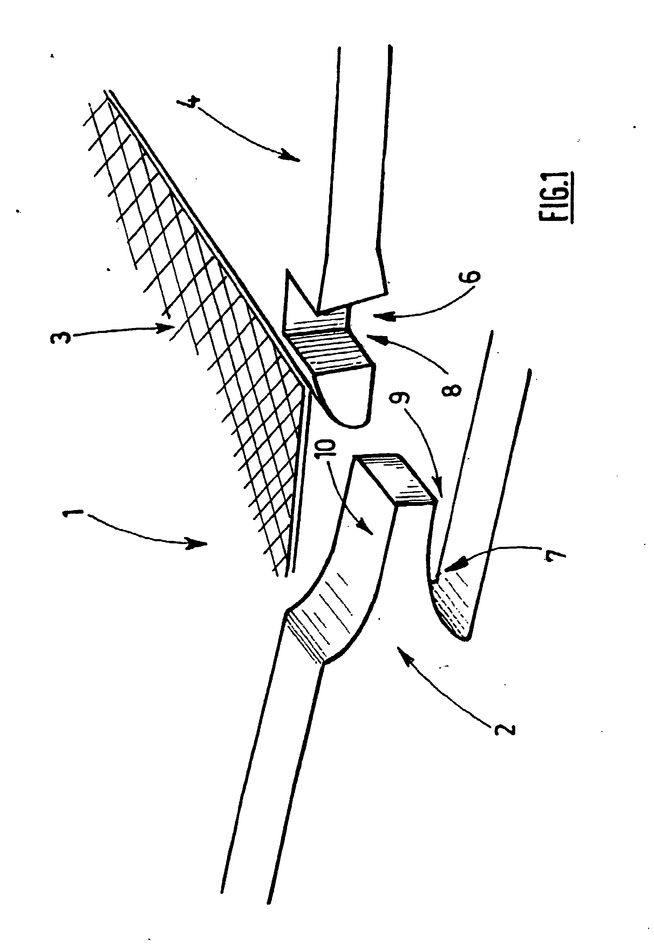

- la figure 1 est une vue schématique partielle en perspective d'un dispositif selon l'invention, le rideau étant en position déroulée et les coins ne coopérant pas avec les moyens de réception,

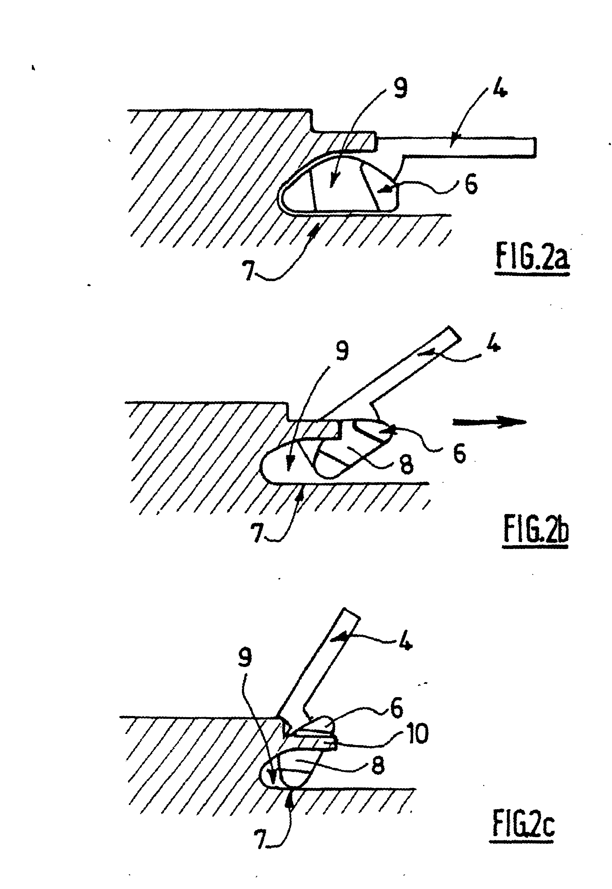

- les figures 2a, 2b et 2c sont des vues schématiques partielles latérales d'un dispositif analogue à celui de la figure 1, le rideau étant en position déroulée et les coins coopérant avec les moyens de réception de sorte que la bavette soit en position horizontale (2a), les coins étant désengagés des moyens de réception et la bavette étant partiellement relevée (2b) et les coins coopérant avec les moyens de réception de sorte que la bavette soit en position relevée (2c).

En référence à la figure 1, on décrit à présent un dispositif 1 de recouvrement d'un compartiment à bagages de véhicule automobile, ledit dispositif comprenant :
- deux supports latéraux 2 solidaires du compartiment à bagages,
- un cache bagages comprenant un rideau 3 de recouvrement souple, un dispositif d'enroulement dudit rideau, non représenté, associé au bord avant dudit rideau et auxdits supports latéraux, et une bavette 4 rigide, sensiblement plane, associé au bord arrière dudit rideau.

La bavette 4 comprend deux coins avant 6 agencés pour coopérer avec des moyens de réception 7 prévus sur les supports latéraux 2 de sorte à permettre le maintien du rideau 3 en position horizontale déroulée d'utilisation.

La bavette 4 masque alors horizontalement, dans le prolongement du rideau 3, la partie arrière du compartiment à bagages.

Les coins 6 et les moyens de réception 7 sont respectivement agencés pour permettre, par manipulation de l'utilisateur, un pivotement vers le haut de la bavette 4 autour desdits coins de sorte à permettre un accès au compartiment à bagages lorsque le rideau 3 est en position déroulée d'utilisation.

Selon la réalisation représentée, les coins 6 et les moyens de réception 7 desdits coins sont respectivement agencés pour permettre un positionnement stable de la bavette 4 dans la position relevée.

Selon la réalisation représentée, les coins 6 et les moyens de réception 7 desdits coins sont en outre respectivement agencés pour permettre un positionnement stable de la bavette 4 en position horizontale, de sorte à garantir un bon recouvrement des bagages.

Les coins 6 comprennent une encoche 8, sensiblement perpendiculaire au plan de la bavette 4, et les moyens de réception 7 comprennent un logement 9 ouvert vers le compartiment à bagages et vers l'arrière.

Le logement 9 est surmonté d'une avancée 10 saillante vers l'arrière, ladite avancée étant agencée pour pouvoir s'engager dans l'encoche 8 de sorte à bloquer la bavette 4 en position relevée. Les coins 6 sont agencés pour pouvoir s'engager dans le logement 7 de sorte à bloquer ladite bavette en position horizontale.

On décrit à présent, en référence aux figures 2a, 2b et 2c, la cinématique d'actionnement de la bavette 4 par l'utilisateur, dans le cadre d'un mode de réalisation analogue à celui décrit ci-dessus, les coins 6 étant abaissés par rapport à la réalisation de la figure 1, pour faire passer ladite bavette de sa position horizontale à sa position relevée.

On notera que les coins 6 peuvent être aménagés par l'ajout d'éléments rapportés à la bavette 4.

La figure 2a présente un coin 6 coopérant avec un moyen de réception 7 de sorte que la bavette 4 soit en position horizontale, le coin 6 étant engagé dans un logement 9. De façon non visible, un deuxième coin, disposé à l'opposé du coin 6, coopère de façon similaire avec un autre moyen de réception, le dispositif comprenant deux coins symétriques coopérant avec deux moyens de réception.

La figure 2b représente, sous l'effet d'une traction (flèche) sur la bavette 4 effectuée vers l'arrière par l'utilisateur, un coin 6 désengagé d'un moyen de réception 7 et ladite bavette partiellement relevée.

La figure 2c représente un coin 6 coopérant avec un moyen de réception 7 de sorte que la.bavette 4 soit en position relevée, l'avancée 10 étant engagée dans l'encoche 8.

Le maintien stable de la bavette 4 dans chacune des positions, horizontale et relevée, est assuré au moyen du dispositif d'enroulement qui garantit la bonne coopération entre les coins 6 et les moyens de réception 7 en tirant la bavette 4 vers l'avant du véhicule.

## Revendications

1. Dispositif (1) de recouvrement d'un compartiment à bagages de véhicule automobile, ledit dispositif comprenant :
• deux supports latéraux (2) solidaires du compartiment à bagages,
• un cache bagages comprenant un rideau (3) de recouvrement souple, un dispositif d'enroulement dudit rideau, associé au bord avant dudit rideau et auxdits supports latéraux, et une bavette (4) rigide, sensiblement plane, associé au bord arrière dudit rideau, ladite bavette comprenant deux coins (6) avant agencés pour coopérer avec des moyens de réception (7) prévus sur lesdits supports latéraux de sorte à permettre le maintien dudit rideau en position horizontale déroulée d'utilisation, ladite bavette masquant horizontalement, dans le prolongement dudit rideau, la partie arrière dudit compartiment à bagages,
lesdits coins et lesdits moyens de réception étant respectivement agencés pour permettre, par manipulation de l'utilisateur, un pivotement vers le haut de ladite bavette autour desdits coins de sorte à permettre un accès audit compartiment à bagages lorsque ledit rideau est en position déroulée d'utilisation, ledit dispositif étant **caractérisé en ce que** lesdits coins et lesdits moyens de réception desdits coins sont respectivement agencés pour permettre un positionnement stable de ladite bavette en position relevée.

2. Dispositif selon la revendication 1, **caractérisé en ce que** les coins (6) et les moyens de réception (7) desdits coins sont en outre respectivement agencés pour permettre un positionnement stable de la bavette (4) en position horizontale.

3. Dispositif selon la revendication 1 ou 2, **caractérisé en ce que** les coins (6) comprennent une encoche (8), sensiblement perpendiculaire au plan de la bavette (4), les moyens de réception (7) comprenant un logement (9) ouvert vers le compartiment à bagages et vers l'arrière, ledit logement étant surmonté d'une avancée (10) saillante vers l'arrière, ladite avancée étant agencée pour pouvoir s'engager dans ladite encoche de sorte à bloquer ladite bavette en position relevée, et lesdits coins étant agencés pour pouvoir s'engager dans ledit logement de sorte à bloquer ladite bavette en position horizontale.

4. Dispositif selon l'une quelconque des revendications 1 à 3, **caractérisé en ce que** les coins (6) sont réalisés d'une seule pièce avec la bavette (4).

5. Dispositif selon l'une quelconque des revendications 1 à 3, **caractérisé en ce que** les coins (6) sont formés par des pièces rapportées sur la bavette (4).

## Claims

1. Device (1) for covering an automobile baggage compartment, said device comprising:
- two lateral supports (2) integral with the baggage compartment.
- a baggage cover comprising a curtain (3) of flexible covering, a device for winding of said curtain, associated to the front edge of said curtain and to said lateral supports, and a rigid flap (4), substantially plane, associated to the rear edge of said curtain, said flap comprising two front corners (6) arranged to interact with means of receiving (7) provided on said lateral supports in such a way as to allow the maintaining of said curtain in unwound horizontal position of use, said flap horizontally concealing, in the extension of said curtain, the rear portion of said baggage compartment,
said corners and said means of receiving being respectively arranged in order to allow, via manipulation by the user, a pivoting toward the top of said flap around said corners in such a way as to allow access to said baggage compartment when said curtain is in unwound position of use, said device being **characterised in that** said corners and said means of receiving of said corners are respectively arranged in order to allow for a stable positioning of said flap in raised position.

2. Device set forth in claim 1, **characterised in that** the corners (6) and the means of receiving (7) of said corners are furthermore respectively arranged in order to allow for a stable positioning of the flap (4) in horizontal position.

3. Device set forth in claim 1 or 2, **characterised in that** the corners (6) include a notch (8), substantially perpendicular to the plane of the flap (4), said means of receiving (7) comprising a housing (9) open towards the baggage compartment and towards the rear, said housing being topped by a protuberance (10) towards the rear, said protuberance being arranged in order to be able to pass into said notch in such a way as to lock said flap in raised position, and said corners being arranged in order to be able to pass into said housing in such a way as to lock said flap in horizontal position.

4. Device as set forth in any of claims 1 to 3, **characterised in that** the corners (6) are made of a single part with the flap (4).

5. Device as set forth in any of claims 1 to 3, **characterised in that** the corners (6) are formed by parts added onto the flap (4).

## Patentansprüche

1. Vorrichtung (1) zum Abdecken eines Kofferraums eines Kraftfahrzeugs, wobei die Vorrichtung folgendes umfasst:
- zwei seitliche Stützen (2), die mit dem Kofferraum fest verbunden sind,
- eine Gepäckabdeckung, umfassend einen biegsamen Abdeckvorhang (3), eine Vorrichtung zum Aufwickeln des Vorhangs, die mit dem vorderen Rand des Vorhangs und den seitlichen Stützen verbunden ist, und einen steifen, im Wesentlichen flachen Lappen (4), der mit dem hinteren Rand des Vorhangs verbunden ist, wobei der Lappen zwei vordere Ecken (6) umfasst, die eingerichtet sind, um mit Aufnahmemitteln (7) zusammenzuwirken, die auf den seitlichen Stützen vorgesehen sind, um das Festhalten des Vorhangs in einer abgewickelten waagerechten Gebrauchsposition zu ermöglichen, wobei der Lappen waagerecht in der Verlängerung des Vorhangs den hinteren Teil des Kofferraums verdeckt,
wobei die Ecken und die Aufnahmemittel jeweils eingerichtet sind, um durch Betätigung durch den Benutzer ein Verschwenken des Lappens derart nach oben um die Ecken herum zu ermöglichen, dass ein Zugriff auf den Kofferraum ermöglicht wird, wenn der Vorhang sich in der abgewickelten Gebrauchsposition befindet, wobei die Vorrichtung **dadurch gekennzeichnet ist, dass** die Ecken und die Aufnahmemittel der Ecken jeweils eingerichtet sind, um eine stabile Positionierung des Lappens in einer angehobenen Position zu ermöglichen.

2. Vorrichtung nach Anspruch 1, **dadurch gekennzeichnet, dass** die Ecken (6) und die Aufnahmemittel (7) der Ecken ferner jeweils eingerichtet sind, um eine stabile Positionierung des Lappens (4) in einer waagerechten Position zu ermöglichen.

3. Vorrichtung nach Anspruch 1 oder 2, **dadurch gekennzeichnet, dass** die Ecken (6) einen Einschnitt (8) umfassen, der im Wesentlichen zur Ebene des Lappens (4) rechtwinklig ist, wobei die Aufnahmemittel (7) eine Einlassung (9) umfassen, die zum Kofferraum und nach hinten offen ist, wobei über der Einlassung ein Vorsprung (10) angebracht ist, der nach hinten überragt, wobei der Vorsprung eingerichtet ist, um derart in den Einschnitt einzugreifen, dass er den Lappen in der angehobenen Position blockiert, und die Ecken eingerichtet sind, um derart in die Einlassung eingreifen zu können, dass sie den Lappen in der waagerechten Position blockieren.

4. Vorrichtung nach einem der Ansprüche 1 bis 3, **dadurch gekennzeichnet, dass** die Ecken (6) mit dem Lappen (4) aus einem Stück ausgebildet sind.

5. Vorrichtung nach einem der Ansprüche 1 bis 3, **dadurch gekennzeichnet, dass** die Ecken (6) von auf dem Lappen (4) angesetzten Teilen gebildet werden.
